(19) Europäisches Patentamt
European Patent Office
Office européen des brevets

(11) Veröffentlichungsnummer: **0 443 151 A2**

(12) **EUROPÄISCHE PATENTANMELDUNG**

(21) Anmeldenummer: 90124371.7

(51) Int. Cl.⁵: **B29D 30/30**

(22) Anmeldetag: 17.12.90

(30) Priorität: 21.02.90 DE 4005401

(43) Veröffentlichungstag der Anmeldung:
28.08.91 Patentblatt 91/35

(84) Benannte Vertragsstaaten:
**BE DE FR GB IT LU NL**

(71) Anmelder: **Continental Aktiengesellschaft**
**Königsworther Platz 1, Postfach 1 69**
**W-3000 Hannover 1(DE)**

(72) Erfinder: **Böttcher, Harry**
**Waldmannsbreite 38**
**W-3540 Korbach(DE)**

(54) **Greif- und Transportvorrichtung für einer Reifenaufbautrommel zuzuführende Bandage.**

(57) Vorrichtung zum Zuführen flexibler Bauteile (30) auf eine gekrümmte Weiterbearbeitungsvorrichtung (29), beispielsweise dem Zuführen einer Bandage auf eine Reifenaufbautrommel. Ein mit einem Unterdruck beaufschlagbarer Vakuumschlauch (16) ist zum Erfassen des flexiblen Bauteils (30) vorgesehen. Der Vakuumschlauch (16) ist mittels Hubzylinder (13, 13a) anheb- und absenkbar und die Hubzylinder (13, 13a) sind durch Führungsmittel relativ zu der Weiterbearbeitungsvorrichtung (29) verfahrbar.

EP 0 443 151 A2

# GREIF- UND TRANSPORTVORRICHTUNG FÜR EINER REIFENAUFBAUTROMMEL ZUZUFÜHRENDE BANDAGEN

Die Erfindung betrifft eine Vorrichtung zum Zuführen flexibler Bauteile auf eine gekrümmte Weiterbearbeitungsvorrichtung, beispielsweise dem Zuführen einer Bandage auf eine Reifenaufbautrommel.

Beim Aufbau von Kraftfahrzeug-Luftreifen werden die einzelnen Lagen, Bandagen, Laufstreifen usw. überwiegend von Hand einer Reifenaufbautrommel zugeführt, aufgelegt und mittels eines Spezialmessers auf die jeweils benötigte Materiallänge abgelängt. Diese Schnittkanten verlaufen üblicherweise in einem spitzen Winkel zur Längsachse der Materialbahn, um einen gleichmäßigen und allmählichen Übergang an den zusammengeführten Stoßkanten zu erzielen. Zur exakten Zusammenführung der Stoßkanten sind dabei visuelle Markierungen angelegt und von dem Bedienungspersonal zu beachten. Der gleichmäßige Reifenaufbau ist somit von der Sorgfalt des Maschinenpersonals und von der Genauigkeit optischer Hilfsmittel abhängig. Da die Sorgfalt und Aufmerksamkeit eines Menschen während eines Arbeitstages schwankt, sind Fehlerquellen nicht auszuschließen und jeder Reifen erfordert eine sorgfältige Nachkontrolle.

Die Restspitzen nach dem Ablängen werden darüber hinaus von Hand nachgeführt, geglättet und die Überlappung von Hand korrigiert. Erst danach kann die Laufstreifenpfanne unter die Aufbautrommel verfahren werden, um den Laufstreifen automatisch auflegen zu können.

Aufgabe der vorliegenden Erfindung ist es, eine Vorrichtung zu schaffen, mit der vorgeschnittene, flexible Bauteile automatisch gegriffen und einer gekrümmten Weiterbearbeitungvorrichtung zugeführt werden können.

Gelöst wird diese Aufgabe dadurch, daß ein mit einem Unterdruck beaufschlagbarer Vakuumschlauch zum Erfassen des flexiblen Bauteils vorgesehen ist, der Vakuumschlauch und die Hubzylinder durch Führungsmittel relativ zu der Weiterbearbeitungsvorrichtung verfahrbar sind. Durch diese Maßnahmen wird eine Vorrichtung geschaffen, mit der beispielsweise eine spitzwinklig angeschnittene Bandage über die gesamte Länge ihrer Schnittkante gleichmäßig gegriffen und über die Krümmung einer Reifenaufbautrommeln angelegt und geglättet werden kann.

Zum Andrücken der zugeführten Bandage ist es vorgesehen, daß einem der Hubzylinder eine Andrückbürste zugeordnet ist, wobei die Andrückbürste mit einem weiteren Hubzylinder relativ zu dem zuzuführenden Bauteil auf- und absenkbar ist.

Weitere vorteilhafte Maßnahmen sind in den Unteransprüchen beschrieben. Die Erfindung ist in der beiliegenden Zeichnung dargestellt und wird nachfolgend näher beschrieben; es zeigt:

Fig. 1     die vordere Ansicht einer Vorrichtung zum Zuführen einer Reifenbandage auf eine Reifenaufbautrommel;

Fig. 1a    die Seitenansicht einer Vorrichtung nach Fig. 1, mit auf Vakuumanschlüsse aufgestecktem Vakuumschlauch;

Fig. 2     die Detaildarstellung eines mit einer Vorrichtung nach der Fig. 1 absenkbaren Vakuumschlauches;

Fig. 2a    den Schnitt durch einen Vakuumschlauch nach der Fig. 2;

Fig. 3     die schematische Darstellung einer Vorrichtung zum Zuführen eines flexiblen, endlosen Bauteils auf eine Reifenaufbautrommel, in Grundstellung;

Fig. 4     die schematische Darstellung einer Vorrichtung nach der Fig. 3 mit einem an die Reifenaufbautrommel verfahrenen Zuführtisch und von dem Vakuumschlauch gegriffenen Bandagenanfang;

Fig. 5     eine Vorrichtung nach Fig. 3 mit durch den Vakuumschlauch über die Aufbautrommel geführter Bandage;

Fig. 6     eine Vorrichtung nach den Figuren 3 bis 5, während des Anlegens der Bandagenspitze mittels des Vakuumschlauches;

Fig. 7     eine Vorrichtung nach der Fig. 3 während des Auflegens der endlosen Bandage;

Fig. 8     eine Vorrichtung nach der Fig. 3 während des Ablängens der auf eine Reifenaufbautrommel aufgelegten Bandage;

Fig. 9     eine Vorrichtung nach der Fig. 3, während des Auflegens eines Laufstreifens auf die Bandage, mittels einer Laufstreifenpfanne;

Fig. 10    eine Vorrichtung zum Zuführen eines flexiblen Bauteils gemäß Grundstellung nach der Fig. 3, während des Auflegens eines Laufstreifens;

Fig. 11    die Vorrichtung nach der Fig. 10 mit aufgelegtem Laufstreifen in Verbindungsposition und Zuführvorrichtung nach der Fig. 3 in Grundstellung.

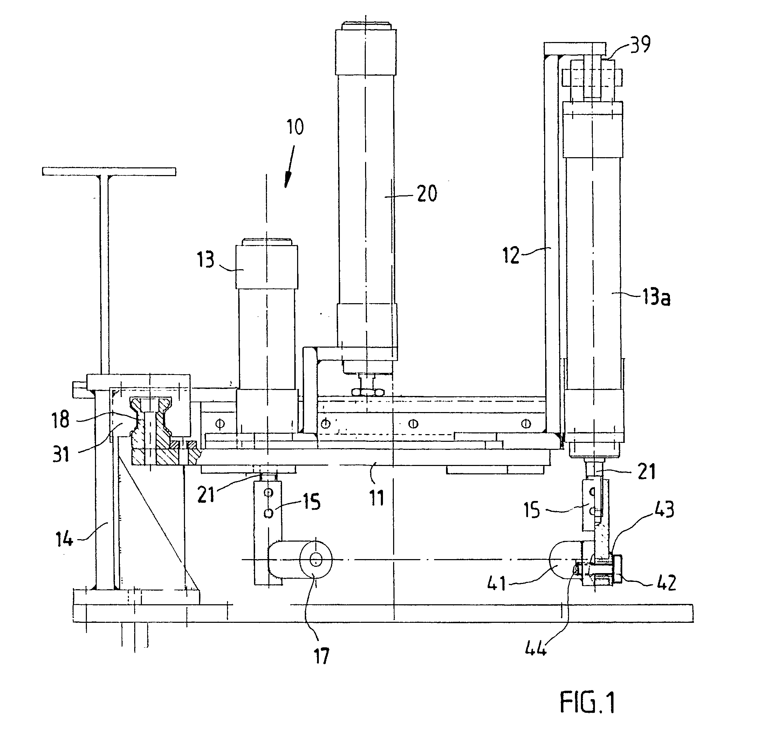

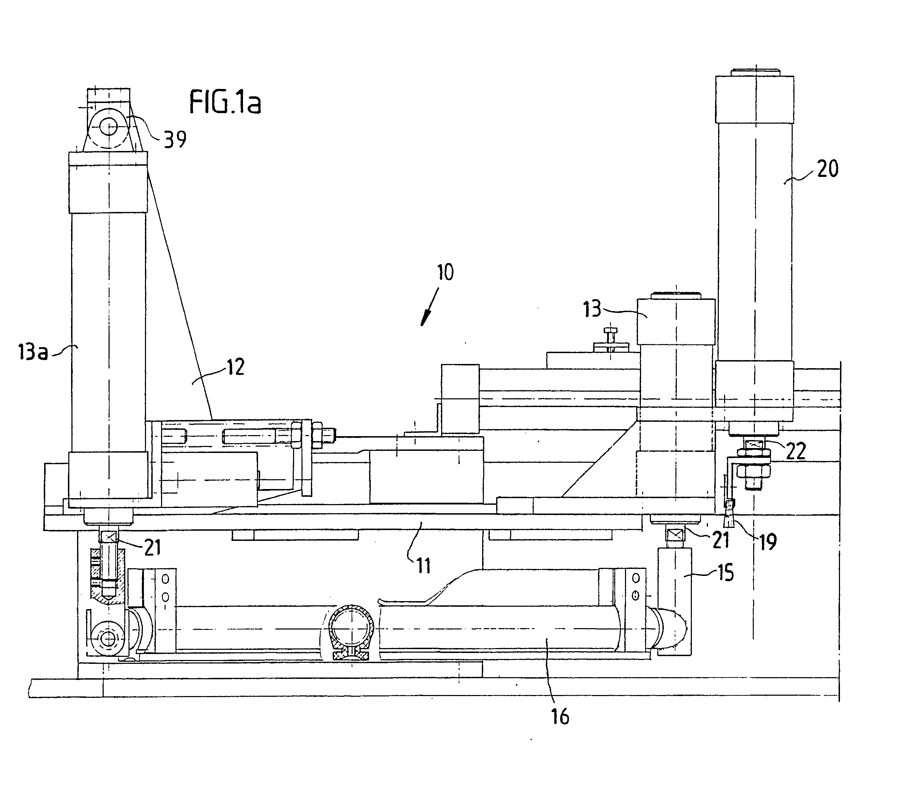

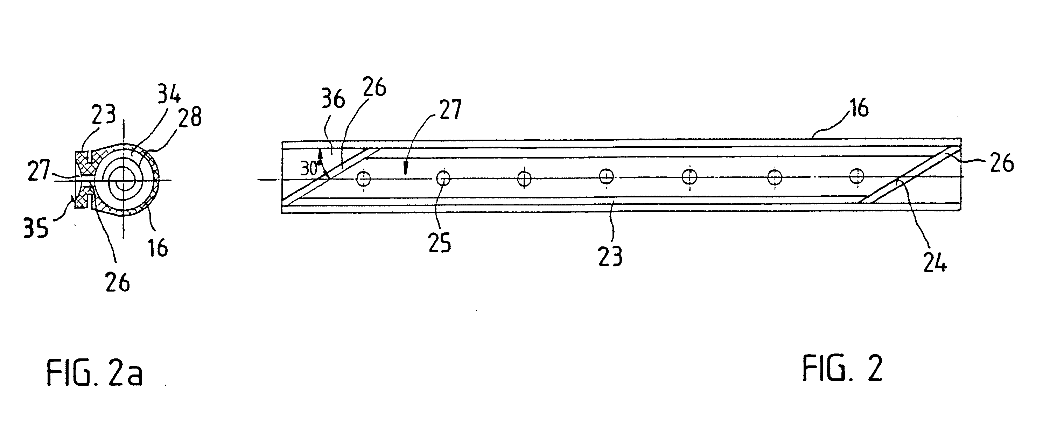

Die in den Figuren 1 und 2 dargestellte Greif- und Transportvorrichtung 10 besteht im wesentlichen aus einer Trägerplatte 11 mit der ein Hubzylinder 13 und ein an einem Ständer 12 befestigter zweiter Hubzylinder 13a miteinander verbunden sind. Die Hubzylinder 13 und 13a sind über einund ausfahrbare, und damit höhenverstellbare Stempel 21 mit Halterungen 15 verbunden, zwischen denen ein flexibler Vakuumschlauch 16 verläuft, der, wie die Fig. 1a zeigt, auf Vakuumanschlüsse 17 aufgeschoben ist. Die Trägerplatte 11 ist mit einer Führungsschiene 18 verbunden. Die Führungsschiene 18 ist in einem Führungsschlitten 31 geführt, der durch eine Lagerstütze 14 gehalten ist. Die Führungsschiene 18 ist längsverlaufend angeordnet. Damit kann die gesamte Greif- und Transportvorrichtung 10 längs verschoben werden.

Die Hubzylinder 13 und 13a sind innerhalb der Trägerplatte 11 parallel zu der Schnittrichtung verstellbar, um unterschiedlich lange flexible Vakuumschläuche 16 bei unterschiedlichen Materialbreiten und den dadurch unterschiedlichen Schnittlängen und damit unterschiedlichen Positionen der Bandagenspitzen 30a einsetzen zu können. Der Hubzylinder 13a ist darüberhinaus in einer Halterung 39 schwenkbar gelagert. Dadurch wird beim Auflegen der Bandage 30 auf eine Reifenaufbautrommel 29 das erforderliche Einschwenken der Bandagenspitze 30a erreicht. In besonders vorteilhafter Weise wird dabei die Bandage 30 an ihrem vorderen spitzen Ende von dem Vakuumschlauch 16 gehalten. Vorteilhaft ist es ferner, wenn der Hubzylinder 13a gegen ein nicht näher dargestelltes Federelement verschwenkbar ist. Beim Nachführen wird der Vakuumschlauch 16 so gedehnt, daß die ergriffene Schnittlänge unverändert bleibt.

Die Ausgleichsbewegung des am Stempel 21 des Hubzylinders 13a aufgeschobenen Endes des Vakuumschlauches 16 wird dadurch ermöglicht, daß zur Aufnahme des Schlauches ein Schwenkstück 41 über eine Schraube 42, die eine Distanzhülse 43 durchdringt und in eine Gewindebohrung 44 des Schwenkstückes 41 faßt, drehbar am Halter 15 befestigt ist. Der Vakuumschlauch 16 ist am anderen Ende auf einen Vakuumanschluß 17 aufgeschoben, mit dem in ihm ein Unterdruck erzeugt werden kann. Der in den Fig. 2 und 2a im Detail dargestellte Vakuumschlauch 16 weist einen Schlauchhohlraum 34 auf, in den eine Spiralfeder 28 eingelegt ist. Der Vakuumschlauch 16 ist an einer Seite mit einer Vakuumleiste 23 versehen, die eine nach innen gekrümmte, längsverlaufende Saugkammer 27 aufweist.

Die Saugkammer 27 ist an ihren beiden Enden mit Dichtleisten 26 versehen und abgeschlossen. Die Dichtleisten 26 weisen dabei die gleiche Höhe wie die Vakuumleiste 23 auf, so daß eine ebene Greifläche ensteht. Zwischen der Saugkammer 27 und dem Schlauchhohlraum 34 sind eine Vielzahl von Bohrungen 25 vorgesehen, mit denen ein über den Vakuumanschluß 17 eingebrachtes Vakuum übertragen werden kann. Die Enden der Saugkammer 27 sind mit Abschrägungen 24 versehen, die in einem vorbestimmten Winkel 36 verlaufen. Der vorbestimmte Winkel 36 entspricht dabei den Schnittwinkeln bei der Ablängung eines zuzuführenden, flexiblen Bauteils, beispielsweise einer Reifen-Bandage.

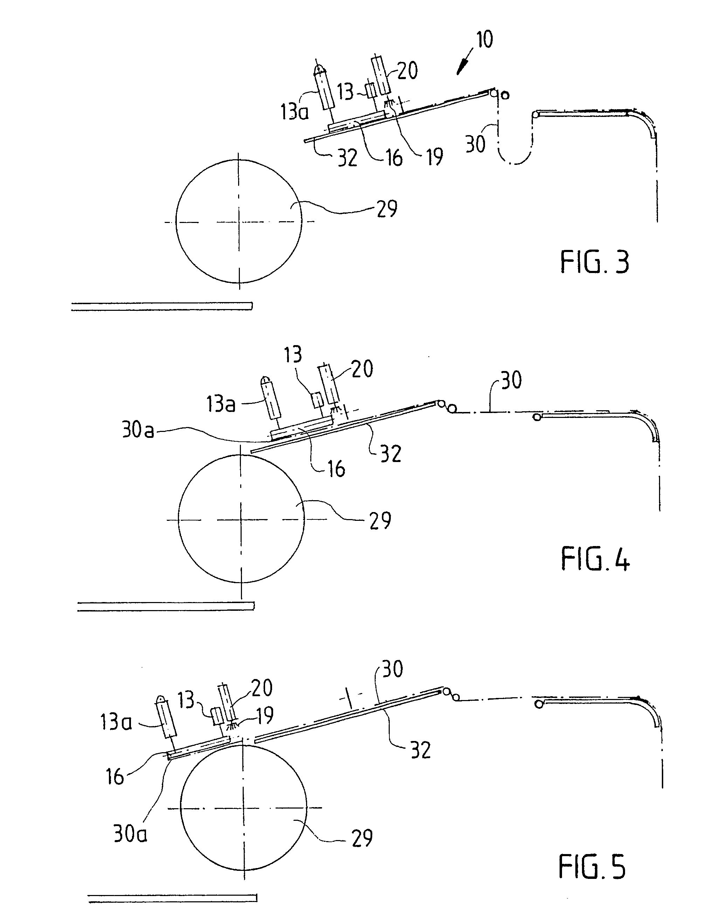

Wie die Fig. 3 zeigt, kann mit der oben beschriebenen Greif- und Transportvorrichtung 10 ein quasi endlos zugeführtes flexibles Bauteil, beispielsweise eine Reifenbandage 30, einer gekrümmten Weiterbearbeitungsvorrichtung, beispielsweise eine Reifenaufbautrommel 29, zugeführt werden. Die Bandage 30 wird dabei auf einen Zuführtisch 32 aufgelegt und der Zuführtisch 32, wie die Fig. 4 zeigt, gegen die Reifenaufbautrommel 29 verfahren.

Um einen gleichmäßigen Übergang an den Schnittkanten zwischen Bandagenanfang und Bandagenende zu erreichen, ist der Bandagenanfang zunächst in einem vorbestimmbaren Winkel 36, der dem Winkel der Abschrägung 24 an dem Vakuumschlauch 16 entspricht, zugeschnitten. Diese abgeschrägte Bandagenspitze 30a wird entlang ihrer Schnittkante von dem Vakuumschlauch 16 ergriffen, indem über den Vakuumanschluß 17 ein Vakuum gezogen wird. Mit Hilfe der Hubzylinder 13 und 13a wird sodann die Bandage 30 von dem Zuführtisch 32 angehoben und, wie die Fig. 5 zeigt, über die Reifenaufbautrommel 29 gezogen.

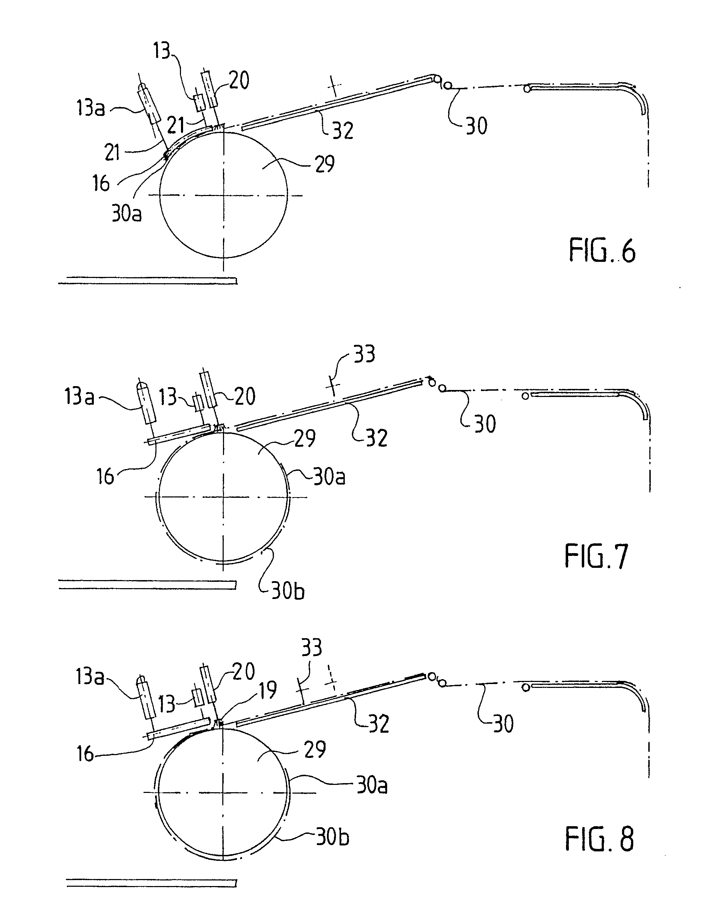

Wie die Fig. 6 zeigt, kann die Bandagenspitze 30a mit dem flexiblen Vakuumschlauch 16 durch unterschiedliches Absenken der Stempel 21 und Verschwenken des Hubzylinders 13a an die gekrümmte Oberfläche der Reifenaufbautrommel 29 angelegt werden. Durch die eingelegte Spiralfeder 28 bleibt der Vakuumschlauch 16 in sich formstabil und kann dem Krummungsradius der Reifenaufbautrommel 29 folgen, ohne daß das Vakuum durch unbeabsichtigtes Anheben der Vakuumleisten 23 bzw. der Dichtleisten 26 zusammenbricht. Die Stempel 21 sind unterschiedlich weit ausfahrbar, so daß der Vakuumschlauch 16 durch Dehnen der Oberfläche der Reifenaufbautrommel 29 angepaßt und nachgeführt werden kann.

Wie die Figuren 1 und 2 weiter zeigen, ist die Greif- und Transportvorrichtung 10 noch mit einem weiteren Hubzylinder 20 versehen, mit dem eine Andrückbürste 19 gegen die Reifenaufbautrommel 29 abgesenkt werden kann. Mit der Andrückbürste 19 wird die bereits verbaute Bandage 30b, wie dies die Fig. 7 zeigt, angedrückt und glattgestrichen. Die Andrückbürste 19 wird dazu mit einem von dem Hubzylinder 20 betätigten Bürstenstempel 22 auf- und abbewegt.

Wie die Fig. 8 zeigt, ist dem Zuführtisch 19 ein Ablängmesser 33 zugeordnet, mit der die auf die Reifenaufbautrommel 29 aufzulegende Bandage 30 auf die jeweils erforderliche Länge abgelängt werden kann. Die Ablängung erfolgt,wenn die Bandage 30 ca. zu 3/4 des Umfangs auf der Reifenaufbautrommel 29 aufliegt; sie erfolgt in einem vorbestimmten Schnittwinkel 36, der dem Winkel der Abschrägung 24 des Vakuumschlauches 16 entspricht.

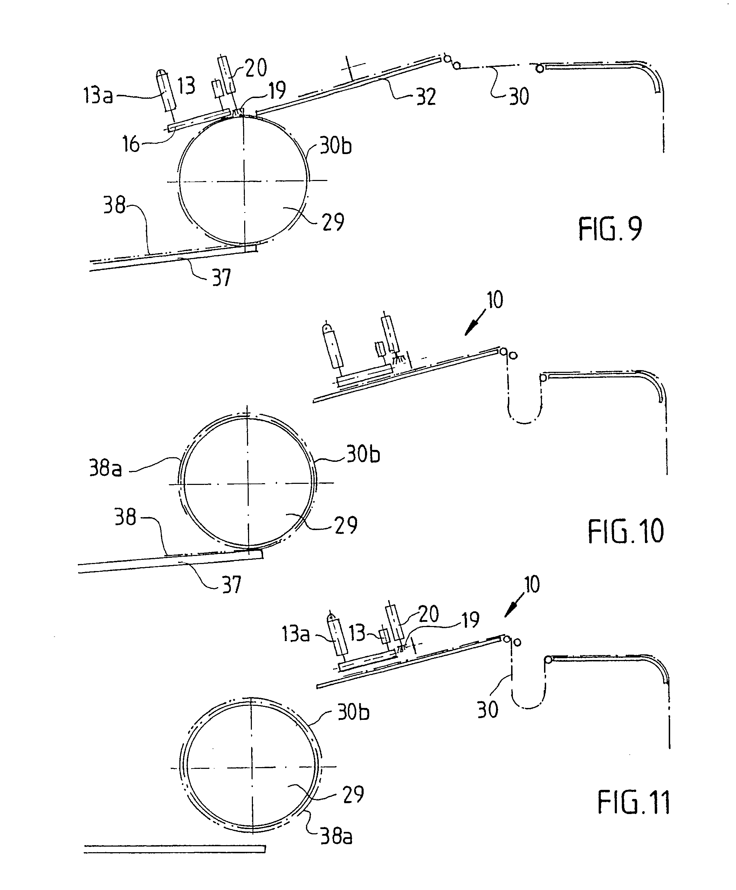

Nach dem Auflegen, Glätten und Ablängen der flexiblen Bandage 30 wird, wie die Fig. 9 zeigt, ein Laufstreifen 38 mit Hilfe einer Laufstreifenpfanne 37 gegen die Reifenaufbautrommel 29 gefahren. Der aufgelegte Laufstreifen 38a überdeckt dabei die verbaute Bandage 30b.

Wie die Fig. 10 zeigt, kann die Greif- und Transportvorrichtung 10 zurückgefahren werden, während der Laufstreifen 38 vollends verbaut wird. Der verbaute Laufstreifen 38a wird ebenfalls geglättet und an seinen Stoßkanten glatt zusammengefügt. Auf der Reifenaufbautrommel 29 wird nun der verbaute Laufstreifen 38a mit der zuvor verbauten Bandage 30 verbunden. Die Greif- und Transportvorrichtung 10 ist, wie die Fig. 11 zeigt, in ihre Grundstellung zurückgefahren und steht bereit für einen neuen Arbeitsgang.

Bezugszeichen

| 10 | Greif- und Transportvorrichtung |
| 11 | Trägerplatte |
| 12 | Ständer |
| 13 | Hubzylinder |
| 13a | Hubzylinder |
| 14 | Lagerstütze |
| 15 | Halterung |
| 16 | Vakuumschlauch |
| 17 | Vakuumanschluß |
| 18 | Führungsschiene |
| 19 | Andrückbürste |
| 20 | Hubzylinder |
| 21 | Stempel |
| 22 | Stempel |
| 23 | Vakuumleiste |
| 24 | Abschrägung |
| 25 | Bohrung |
| 26 | Dichtleiste |
| 27 | Saugkammer |
| 28 | Spiralfeder |
| 29 | Reifenaufbautrommel |
| 30 | Bandage |
| 30a | Bandagenspitze |
| 30b | verbaute Bandage |
| 31 | Führungsschlitten |
| 32 | Zuführtisch |
| 33 | Ablängmesser |
| 34 | Schlauchhohlraum |
| 35 | Dichtfläche |
| 36 | Winkel |
| 37 | Laufstreifenpfanne |
| 38 | Laufstreifen |
| 38a | verbauter Laufstreifen |
| 39 | Halterung |
| 41 | Schwenkstück |
| 42 | Schraube |
| 43 | Distanzhülse |
| 44 | Gewindebohrung |

## Patentansprüche

1. Vorrichtung zum Zuführen flexibler Bauteile auf eine gekrümmte Weiterbearbeitungsvorrichtung, beispielsweise dem Zuführen einer Bandage auf eine Reifenaufbautrommel, dadurch gekennzeichnet, daß ein mit einem Unterdruck beaufschlagbarer Vakuumschlauch (16) zum Erfassen des flexiblen Bauteils (30) vorgesehen ist, der Vakuumschlauch (16) mittels Hubzylinder (13, 13a) anheb- und absenkbar ist und die Hubzylinder (13, 13a) durch Führungsmittel (11, 18, 31) relativ zu der Weiterbearbeitungsvorrichtung (29) verfahrbar sind.

2. Vorrichtung nach Anspruch 1, dadurch gekennzeichnet, daß der Vakuumschlauch (16) einstückig mit einer Vakuumleiste (23) verbunden ist, die Vakuumleiste (23) eine dem Vakuumschlauch (16) abgewandte längsverlaufende Saugkammer (27) aufweist und die Saugkammer (27) mit dem Schlauchhohlraum (34) des Vakuumschlauches (16) über Bohrungen (25) verbunden ist.

3. Vorrichtung nach den Ansprüchen 1 und 2, dadurch gekennzeichnet, daß in den Schlauchhohlraum (34) des Vakuumschlauches (16) eine längsverlaufende Spiralfeder (28) eingelegt ist.

4. Vorrichtung nach den Ansprüchen 1 bis 3, dadurch gekennzeichnet, daß die Saugkammer (27) des Vakuumschlauches (16) stirnseitig durch Dichtleisten (26) abgeschlossen ist, wobei die Dichtleisten (26) mit der Vakuumleiste (23) eine gemeinsame Dichtfläche (35) bilden.

5. Vorrichtung nach den Ansprüchen 1 bis 4, dadurch gekennzeichnet, daß die Dichtleisten (26) in einem vorbestimmbaren Winkel (36) zur Längsrichtung des Vakuumschlauches (16) verlaufen, wobei der Winkel (36) dem Schnittwinkel des zuzuführenden, flexiblen Bauteils (30) entspricht.

6. Vorrichtung nach den Ansprüchen 1 bis 5, dadurch gekennzeichnet, daß die Hubzylinder (13, 13a) mit unterschiedlich weit ausfahrbaren Hubstempeln (21) versehen sind.

7. Vorrichtung nach den Ansprüchen 1 bis 6, dadurch gekennzeichnet, daß die Hubzylinder (13, 13a) an einer gemeinsamen Trägerplatte (11) gehalten sind.

8. Vorrichtung nach den Ansprüchen 1 bis 7, dadurch gekennzeichnet, daß die Hubzylinder (13, 13a) mit der gemeinsamen Trägerplatte (11) mit einer Führungsschiene (18) verbunden und mit der Führungsschiene (18) in einem Führungsschlitten (31) relativ zu der Weiterverarbeitungsvorrichtung, insbesondere einer Reifenaufbautrommel (29) verfahrbar sind.

9. Vorrichtung nach den Ansprüchen 1 bis 8, dadurch gekennzeichnet, daß einem der Hubzylinder (13) eine Andrückbürste (19) zugeordnet ist, wobei die Andrückbürste (19) mit einem weiteren Hubzylinder (20) relativ zu dem zuzuführenden Bauteil (30) auf- und absenkbar ist.

10. Vorrichtung nach den Ansprüchen 1 bis 9, dadurch gekennzeichnet, daß das flexible Bauteil (30) auf einem Zuführtisch (32) der Reifenaufbautrommel (29) zugeführt wird und der Vakuumschlauch (16) in einem vorbestimmbaren Winkel zu dem Zuführtisch (32) schräg verlaufend angeordnet ist.

11. Vorrichtung nach den Ansprüchen 1 und 10, dadurch gekennzeichnet, daß der vorbestimmbare Winkel (36) dem Schneidwinkel eines dem Zuführtisch (32) zugeordneten Ablängmessers (33) entspricht.

12. Vorrichtung nach den Ansprüchen 1 bis 11, dadurch gekennzeichnet, daß der Vakuumschlauch (16) über Vakuumanschlüsse (17) evakuierbar ist.

FIG.1

FIG.1a

FIG. 2

FIG. 2a

FIG. 3

FIG.4

FIG.5

FIG.6

FIG.7

FIG.8

FIG.9

FIG.10

FIG.11